## Europäisches Patentamt
## European Patent Office
## Office européen des brevets

(11) Veröffentlichungsnummer: **0 105 961**
**B1**

(12) **EUROPÄISCHE PATENTSCHRIFT**

(45) Veröffentlichungstag der Patentschrift:
24.09.86

(21) Anmeldenummer: **82109514.8**

(22) Anmeldetag: **14.10.82**

(51) Int. Cl.⁴: **G 01 B 11/06,** G 01 B 5/06, B 23 Q 17/00

(54) **Verfahren zum Messen der abgetragenen Schichtdicke bei subtraktiven Werkstückbearbeitungsprozessen.**

(43) Veröffentlichungstag der Anmeldung:
**25.04.84 Patentblatt 84/17**

(45) Bekanntmachung des Hinweises auf die Patenterteilung:
**24.09.86 Patentblatt 86/39**

(84) Benannte Vertragsstaaten:
**DE FR GB IT**

(56) Entgegenhaltungen:
DE-C-504 263
FR-A-2 379 798

**IBM TECHNICAL DISCLOSURE BULLETIN, Band 22,
Nr. 3, August 1979, Seiten 1054-1055, New York,
USA, H.E. KORTH: "Optical monitoring for nominal
dimensions"**

(73) Patentinhaber: **IBM DEUTSCHLAND GMBH,
Pascalstrasse 100, D-7000 Stuttgart 80 (DE)**
(84) Benannte Vertragsstaaten: **DE**

(73) Patentinhaber: **International Business Machines
Corporation, Old Orchard Road, Armonk, N.Y.
10504 (US)**
(84) Benannte Vertragsstaaten: **FR GB IT**

(72) Erfinder: **Brunsch, Arwed, Dr. Dipl.- Phys., Am
Bopserweg 8, D-7000 Stuttgart 1 (DE)**
Erfinder: **Ruh, Wolf- Dieter, Ing. (grad.),
Sommerhofenstrasse 152/1, D-7032 Sindelfingen
(DE)**
Erfinder: **Trippel, Gerhard, Dr. Dipl.- Phys.,
Steinenbronner Strasse 15, D-7032 Sindelfingen
(DE)**

(74) Vertreter: **Lewit, Leonard, Dipl.- Ing., Schönaicher
Strasse 220, D-7030 Böblingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Bei subtraktiven Bearbeitungsprozessen von Werkstücken besteht häufig die Aufgabe, eine bestimmte Schichtdikke möglichst genau abzutragen und den Prozeß rechtzeitig zu beenden. Diese Aufgabe stellt sich insbesondere beim Ätzen und sonstigem Bearbeiten mit subtraktiven Prozessen von elektrischen Bauelementen, insbesondere Halbleiter- und Keramik-Bauelementen, an deren Formtreue und Maßhaltigkeit sehr hohe Anforderungen gestellt werden. Hierbei kann es sich um Prozesse wie Sputterätzen, reaktives Ionenätzen oder Plasmaätzen in Verbindung mit Technologien wie Photolithographiehandeln, aber auch um Schneid-, Schleif- und andere Verfahren, bei denen von einem Werkstück Material abgetragen wird.

Bei bestimmten Materialien, wie z. B. gesinteren Keramikwerkstoffen, ist die Ätzgeschwindigkeit außerordentlich gering und liegt z. B. in der Größenordnung von 200 à/min., entsprechend 20 nm/min., so daß zur Herstellung einer Strukturtiefe von beispielsweise 12 µm Ätzzeiten von etwa 10 Stunden benötigt werden. Die Ätzraten werden dabei, wenn es sich um Sputterätzen handelt, durch verschiedene Sputterparameter, wie Gasdruck, Gaszusammensetzung, Gasfluß u.a. bestimmt. Gewisse Schwankungen dieser Parameter erschweren die Einhaltung der sehr engen zulässigen Toleranzen, die bei dem vorgenannten Beispiel etwa +1 µm betragen können, so daß auch bei strikter Einhaltung der errechneten Ätzzeit ein hohes Risiko besteht, daß die Toleranzen überschritten werden und das Werkstück unbrauchbar wird. Dies wirkt sich besonders dann gravierend aus, wenn in einem einzigen Ätzprozeß eine große Anzahl von Werkstücken gleichzeitig bearbeitet wird. Nicht selten handelt es sich um mehrere hundert Teile, die gleichzeitig einem Ätzprozeß ausgesetzt werden.

Man kann zwar, wenn die vorgegebene Mindesttiefe der abzutragenden Werkstoffschicht noch nicht erreicht ist, Nachätzen, jedoch schwanken die Ätzraten z. B. beim Start eines Sputterprozesses relativ stark, bis sich die Prozeßparameter stabilisiert haben. Auch in diesem Fall ist es daher schwierig, die gewünschte Ätztiefe genau einzuhalten.

Es kommt somit darauf an sicherzustellen, daß bei subtraktiven Bearbeitungsprozessen die gewünschte Abtragtiefe möglichst genau eingehalten werden kann, was in Anbetracht der aufgezeigten Probleme letztlich nur durch eine zuverlässige kontinuierliche Überwachung der jeweils erreichten Tiefe und eine dementsprechende Steuerung des Prozesses möglich ist. Dabei ist es wünschenswert, diese Meßüberwachung in situ, also während des eigentlichen Prozesses ohne Entnahme des Werkstücks und möglichst ohne Eingriff in den Prozeß durchführen zu können.

Es ist bekannt, die Ätzrate von Halbleiterelementen durch kontinuierliche Beobachtung der Dicke des Elements bzw. der Dickenverringerung während der subtraktiven Bearbeitung mit Hilfe von Infrarotstrahlen durchzuführen, deren von den beiden Flächen reflektierende Strahlen zur Interferenz gebracht werden (IBM Technical Disclosure Bulletin, Bd. 20, Nr. 6, Seite 2268). Hierbei führt man die Messung mittels eines Infrarotdetektors durch und kann daraus, unter Berücksichtigung des bekannten Brechungsindex des Werkstoffs, die Dickenverringerung ermitteln. Dieses Verfahren kann zwar in situ durchgeführt werden, erfordert aber einen aufwendigen Aufbau und nimmt überdies verhältnismäßig viel Zeit in Anspruch.

Ein weiteres Verfahren zur Tiefenbestimmung von Werkstücken, z. B. Dünnfilmschaltungselementen, mit unterschiedlichen Materialschichten besteht darin, die jeweilige Kraterform nach dem subtraktiven Bearbeitungsprozeß, z. B. Sputtern, zu analysieren (IBM Technical Disclosure Bulletin, Bd. 21, Nr. 2, Seite 672). Hier geht es jedoch darum, unterschiedlich harte Werkstückschichten zu berücksichtigen.

Bei einer weiteren Methode, eine Vertiefung in einem Werkstück zu messen, verwendet man ein Mikroskop, das unter einem Winkel von 45° auf die vertikale Wand der Vertiefung gerichtet ist. Bei einer Horizontalverstellung des Werkstücks relativ zum Mikroskop oder umgekehrt von einem Mikroskopzielpunkt an der Vertiefungswand zum nächsten Zielpunkt stimmt dabei die entsprechende Vertikaldistanz mit dem Verstellweg überein, da beide Längen den beiden Schenkeln eines gleichschenkligen Dreiecks entsprechen. Diese im IBM Technical Disclosure Bulletin, Bd. 18, Nr. 7, Seite 2069 beschriebene Methode setzt jedoch eine genaue vertikale, also zur Oberfläche des Werkstücks rechtwinklig verlaufende Fläche der Vertiefung und die Möglichkeit der mikroskopischen Beobachtung derselben voraus.

Der Erfindung liegt die Aufgabe zugrunde, ein Verfahren zum Messen der abgetragenen Schichtdicke bei subtraktiven Werkstückbearbeitungsprozessen zu entwickeln-, das ohne Beeinträchtigung des Prozeßablaufes mit einfachsten Mitteln zuverlässig durchgeführt werden kann. Diese Aufgabe ist mit dem im Patentanspruch angegebenen Verfahren gelöst worden. Das erfindungsgemäße Verfahren bietet die Möglichkeit, die jeweils abgetragene Schichtdicke kontinuierlich in situ zu messen und somit die Prozeßdauer so zu steuern, daß die Einhaltung der vorgegebenen Toleranzen bei der abzutragenden Schichtdicke gewährleistet ist.

Erfindungsgemäß wird die Oberfläche des Meßmusters genauso abgetragen wie das zu ätzende Material der Werkstücke, wobei sich mit zunehmendem Abtragen am Meßmuter die Oberfläche des Meßkeiles verbreitert.

Das erfindungsgemäße Verfahren kann in der einfachsten Weise angewendet werden, indem der Abstand der Spalte durch das Mikroskop beobachtet wird, und durch Vergleich mit dem ursprünglichen, zu Beginn des Prozesses gemessenen Abstandswert läßt sich unter Berücksichtigung des Keilwinkels zu jeder Zeit die durch die Bearbeitung erreichte Tiefe errechnen. Für eine besonders wirksame Anwendung des angegebenen Verfahrens wird der Spaltabstand mittels einer entsprechenden optischen Meßeinrichtung selbsttätig überwacht, deren Ausgangssignale einem Rechner zugeführt werden, in dem die Umrechnungsformel sowie der Ausgangswert des Spaltabstandes gespeichert sind. Durch kontinuierliche Überwachung des Spaltabstandes und ständigen Vergleich des Berechnungsergebnisses mit einem gleichfalls eingespeicherten Sollwert für die Tiefe der abzutragenden Schicht kann somit der Bearbeitungsprozeß völlig selbständig ablaufen und erfordert keine besondere Überwachung.

Das erfindungsgemäße Verfahren wird nachfolgend anhand der Zeichnungen in einem Ausführungsbeispiel beschrieben. Es zeigen:

Fig. 1 in schematischer Darstellung eine Anordnung zum Messen der abgetragenen Schichtdicke (Ätztiefe) beim Sputterätzen von einer Vielzahl von Werkstücken,

Fig.2 ein Werkstück der in Fig. 1 gezeigten Art in vergrößerter schaubildlicher Darstellung,

Fig. 3 eine vergrößerte schematische Darstellung eines Meßmusters, wie es in der Anordnung gemäß Fig. 1 Verwendung findet,

Fig. 4 eine Draufsicht auf das Meßmuster gemäß Fig. 3 und

Fig. 5 eine Draufsicht auf das Meßmuster gemäß Fig. 3, nachdem die durch die Linie 5-5 gekennzeichnete Ätztiefe erreicht ist.

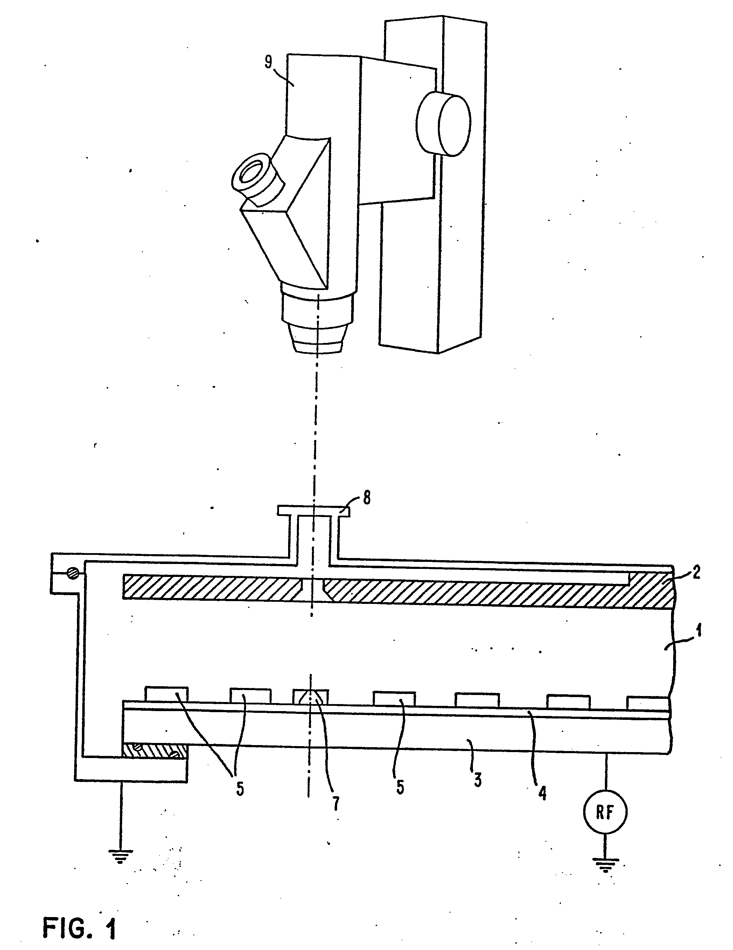

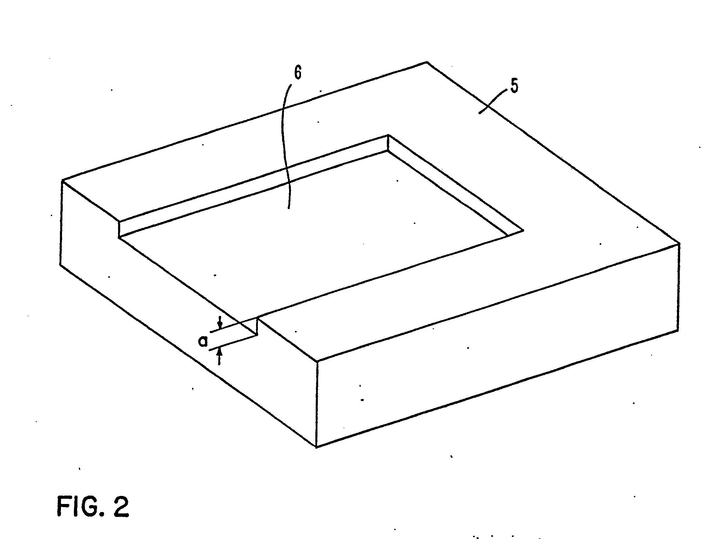

Die in Fig. 1 dargestellte Anordnung zeigt eine Sputterkammer 1 mit einer Anode 2 und einer Kathode 3, auf der eine Werkstück-Trägerplatte 4 aufliegt. Auf der Werkstück-Trägerplatte 4 liegen eine Anzahl Werkstücke 5 aus keramischem Sintermaterial, die einem Sputterätzprozeß ausgesetzt werden. Fig. 2 zeigt ein fertiges Werkstück 5 nach Beendigung des Ätzprozesses, bei dem im zentralen Bereich der Oberfläche bis zu der Kante einer Außenseite eine Vertiefung 6 gebildet wurde. Die übrigen Oberflächenbereiche des Werkstücks 5 sind mittels eines der bekannten Verfahren so beschichtet, daß die Ätzung in den übrigen Bereichen nicht wirksam werden kann.

Für die Tiefe der Vertiefung 6 ist ein Sollmaß a mit geringer Toleranz vorgegeben, beispielsweise $a = 12\ \mu m + 0,5\ \mu m$. Zur Beobachtung der jeweiligen Ätztiefe ist in der Sputterkammer 1 auf der Werkstück-Trägerplatte 4 zwischen den Werkstücken 5 ein Meßmuster 7 aus dem gleichen keramischen Sinterwerkstoff wie die Werkstükke 5 angeordnet, das somit in gleicher Weise dem ätzprozeß ausgesetzt ist wie die Werkstücke 5. Durch ein Schauloch 8 hindurch kann das Meßmuster 7 mittels eines Mikroskops 9 beobachtet werden.

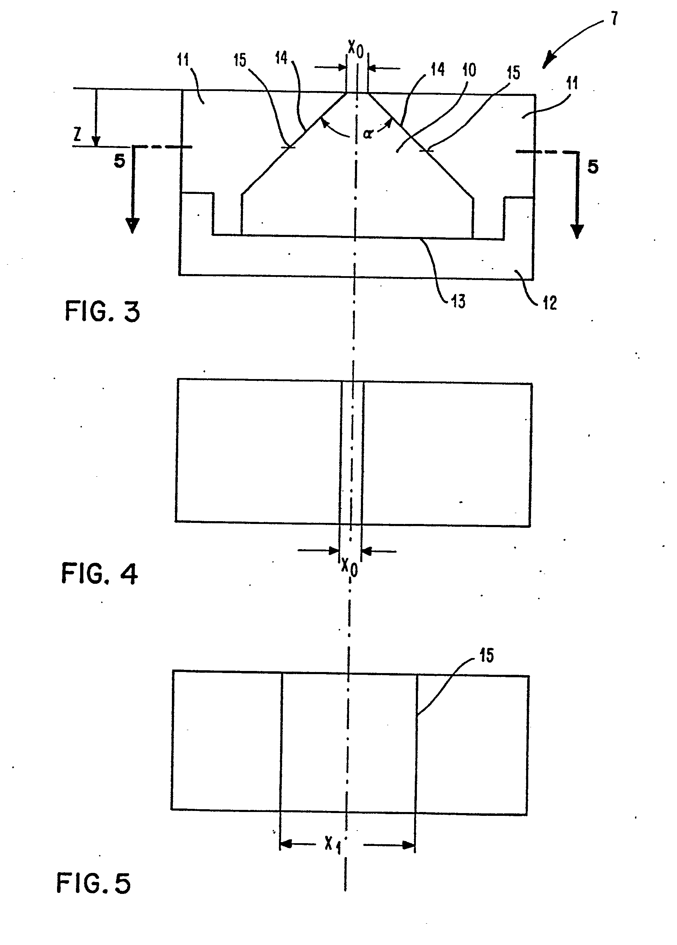

Das Meßmuster 7 besteht gemäß Fig. 3 aus einem Meßkeil 10, zwei Deckstücken 11 und einer U-förmigen Klammer 12. Der Meßkeil 10 liegt mit seiner Basisfläche 13 auf der Klammer 12 auf, und die beiden Keilflächen 14 bilden einen nach oben gerichteten Keilwinkel $\alpha$. Die Keilflächen 14 sind beiderseits von je einem Deckstück 11 abgedeckt, die bezüglich des Keilwinkels $\alpha$ komplementär ausgebildet sind, deren Deckfläche somit unter einem Winkel von 90° -

$$\frac{\alpha}{2}\ \text{gegen}$$

die Horizontale verläuft. Die Klammer 13 hält den Meßkeil 10 und die Deckstücke 11 zusammen. Die Berührungsebenen zwischen den Keilflächen 14 und den daran anliegenden Flächen der Deckstücke 11 werden im folgenden als Spalte 15 bezeichnet. Sowohl der Meßkeil 10 als auch die Deckstücke 11 bestehen, wie bereits erwähnt, aus dem gleichen Werkstoff wie die Werkstücke 5.

Im folgenden wird das Verfahren zum Messen der Ätztiefe der Werkstücke 5 anhand der Fign. 1 und 3 bis 5 beschrieben. Vor Beginn des Ätzprozesses wird der Abstand $x_0$ zwischen den Spalten 15 gemessen, der zwischen den Keilflächen 14 des Meßkeils 10 und den Deckstücken 11 auf der Oberfläche des Meßmusters 7 sichtbar ist (Fign. 3 und 4). Während des Ätzprozesses wird nun an der Oberfläche des Meßmusters 7 genauso Werkstoff abgetragen, wie von den Werkstücken 5 an deren unbeschichteten Bereichen. Mit dem Abtragen des Materials wird dabei die Keiloberfläche proportional verbreitert, so daß der Abstand x zwischen den Spalten 15 an der Oberfläche, der die Breite der Keiloberfläche darstellt, entsprechend größer wird. Zwischen der Breitendifferenz $x_1 - x_0$ und der Ätztiefe $z_1$ besteht die Beziehung:

$$z_1 = \frac{x_1 - x_0}{2\ \text{tg}\ \alpha/2}$$

wobei: $x_0$ die Ausgangsbreite zwischen den Spalten 15, $x_1$ die Breite der Keiloberfläche zum Zeitpunkt $t_1$ und $\alpha$ den Keilwinkel bedeuten. Daraus läßt sich bei einer gewünschten Ätztiefe $z_1$ herleiten, bei welchem Meßwert $x_1$ der Ätzprozeß zu beenden ist:

$x_1 = x_0 + 2z_1 \cdot \text{tg}\ \alpha/2$

Durch Beobachten des Meßmusters 7 im Mikroskop 9 kann somit der Zeitpunkt bestimmt werden, zu dem die gewünschte Ätztiefe z erreicht und der Prozeß zu beenden ist.

Die Beobachtung des Meßmusters 7 hinsichtlich des Abstandes x zwischen den beiden Spalten 15 kann entweder durch eine Bedienungsperson mittels des Mikroskops 9 erfolgen oder automatisch durchgeführt werden. Im letzteren Fall sind die entsprechenden Werte für die gewünschte Ätztiefe z, den Keilwinkel $\alpha$ und die Ausgangsbreite $x_0$ in einen angeschlossenen Rechner eingespeichert, dem ständig Signale, welche die jeweiligen Breitenwerte der Keiloberfläche darstellen, zugeführt werden. Mit Erreichen der gewünschten Ätztiefe z erhält dann die Sputterkammer 1 ein Signal vom Rechner, das den Ätzprozeß beendet. Eine vereinfachte Methode besteht darin, den Wert $x_1$ für die der gewünschten Ätztiefe entsprechende Breite der Keiloberfläche in den Speicher des Rechners einzugeben und die vom Mikroskop 9 ermittelten Werte für x ständig mit diesem Konstantwert zu vergleichen. Diese automatische Durchführung des beschriebenen Meßverfahrens ist insbesondere dann von Vorteil, wenn der Ätzprozeß sehr lange Zeit in Anspruch nimmt, wie z. B. bei besonders harten Werkstoffen, da hierbei die visuelle Überwachung durch eine Bedienungsperson besonders aufwendig ist und überdies die Gefahr besteht, daß durch Unaufmerksamkeit die zulässige Toleranz für die Ätztiefe überschritten wird.

Die Empfindlichkeit des beschriebenen Verfahrens kann durch unterschiedliche Wahl des Keilwinkels $\alpha$ beeinflußt werden. Je größer $\alpha$ gewählt wird, desto schneller wächst bei vorgegebener Ätzgeschwindigkeit der Abstand zwischen den Spalten 15, was die Ablesegenauigkeit erhöht.

Wenn die Werkstücke 5 nicht aus einheitlichem Werkstoff bestehen, sondern unterschiedliche Schichten aufweisen, kann das beschriebene Verfahren in gleicher Weise eingesetzt werden. In diesem Fall wird das Meßmuster 7 ebenfalls mit identischem Werkstoffaufbau wie die Werkstücke 5 hergestellt, indem es, von der Oberfläche beginnend, die gleichen Werkstoffschichten bei gleichem Aufbau enthält. Grundsätzlich ist es möglich, das aus dem Meßkeil 10 und den Deckstücken 11 bestehende Meßmuster 7 aus einem Werkstück 5 herzustellen, z. B. durch Aufsägen. Auf diese Weise ist am einfachsten gewährleistet, daß die Werkstoffe bzw. die werkstoffschichten zwischen den Werkstücken 5 und dem Meßmuster 7 genau übereinstimmen.

Handelt es sich bei dem subtraktiven Bearbeitungsprozeß nicht um ein Ätzverfahren, sondern um ein Schleif- oder Schneidverfahren mit spanabhebender mechanischer Bearbeitung der Werkstücke, so eignet sich das beschriebene Verfahren in der gleichen Weise. In diesem Fall wird die Ausgangsbreite $x_0$ der Keilspitze gemessen, sobald das Bearbeitungswerkzeug die Oberfläche der Werkstücke 5 erreicht hat.

**Patentanspruch**

Verfahren zum Messen der abgetragenen Schichtdicke bei subtraktiven Werkstückbearbeitungsprozessen, dadurch gekennzeichnet,

daß ein aus dem gleichen Werkstoff wie das Werkstück (5) bestehendes Meßmuster (7) gleichzeitig mit dem Werkstück (5) dem Bearbeitungsprozeß ausgesetzt wird, wobei das Meßmuster (7) aus einem Meßkeil (10) und zwei zu den beiderseitigen Keilflächen (14) des Meßkeils (10) komplementären, die Keilflächen (14) abdeckenden Deckstücken besteht,

daß in der Ebene der durch die Keilspitze und die Deckstücke (11) gebildeten, dem Bearbeitungsprozeß ausgesetzten Oberfläche der jeweilige Abstand (x) zwischen den beiden Spalten gemessen wird, die zwischen den beiderseitigen Keilflächen (14) des Meßkeils (10) und den anliegenden Deckstükken gebildet (11) sind,

und daß die jeweils abgetragene Schichtdicke ($z_1$ aus der Differenz zwische dem ursprünglichen Abstand ($x_0$ und dem gemessenen Abstand ($x_1$) unter Berücksichtigung des Keilwinkels ($\alpha$) ermitteln wird.

**Claim**

Method of measuring the removed layer thickness in subtractive workpiece processing, characterized in

that a test sample (7) consisting of the same material as the workpiece (5) is processed simultaneously with the workpiece (5), the test sample (7) consisting of a wedge (10) and two covering pieces (11) complementary to the two lateral surfaces (14) of the wedge (10) and protecting the surfaces (14),

that in the plane of the surface formed by the wedge point and the covering pieces (11) and exposed to processing, the respective distance (X) between the two gaps (15) is measured which appear between the lateral surfaces (14) of the wedge (10) and the adjacent protecting pieces (11),

and that the respectively removed layer thickness ($Z_1$) is determined from the difference between the original distance ($X_0$) and the measured distance (X1), taking into consideration the wedge angle ($\alpha$).

**Revendication**

Procédé pour mesurer l'épaisseur de couche enlevée dans des opérations d'usinage soustractif de pièces, caractérisé en ce qu'on soumet un témoin de mesure (7) composé de la même matière que la pièce (5) à l'opération d'usinage simultanément avec la pièce (5), le témoin de mesure (7) étant composé d'un coin de mesure (10) et de deux pièces de recouvrement (11), complémentaires des surfaces inclinées (14) des deux côtés du coin de mesure (10), et qui recouvrent les surfaces inclinées (14), on mesure, dans le plan de la surface formée par la pointe du coin et par les pièces de recouvrement (11), qui est soumise à l'opération d'usinage, la distance (x) entre les deux fentes (15) qui sont formées entre les surfaces inclinées (14) des deux côtés du coin de mesure (10) et les pièces de recouvrement appuyées sur ces surfaces et on calcule l'épaisseur de couche ($z_1$) qui a été enlevée à un instant considéré en se basant sur la différence entre la distance initiale ($x_0$) et la distance mesurée ($x_1$) en tenant compte de l'angle ($\alpha$) du coin.

FIG. 1

FIG. 2

FIG. 3

FIG. 4

FIG. 5